# EUROPEAN PATENT SPECIFICATION

(11) **EP 2 034 578 B1**
(45) Date of publication and mention of the grant of the patent: **11.01.2012**
(21) Application number: 07115630.1
(22) Date of filing: 04.09.2007
(51) Int. Cl.: H02G 3/12, A61G 12/00

(54) **Mounting frame for application modules**
Montagerahmen für Anwendungsmodule
Cadre de montage pour modules d'application

(43) Date of publication of application: 11.03.2009
(73) Proprietor: NIKO, N.V., 9100 Sint-Niklaas (BE)
(72) Inventor: Tas, Johan (Helena Alice), 9100 Sind-Niklaas (BE)
(74) Representative: Van Ballaer, Evi Maria August

(56) References cited:
- EP-A- 0 837 535
- EP-A- 1 050 941
- DE-U1- 9 306 127

## Description

### Field of the Invention

The present invention concerns a mounting frame for application modules such as electrical modules, which can be a power socket-outlet for a plug of any electrical device, a switch, a socket-outlet for data connection, etc. The application modules can also be of other kind, such as for example gas connections or luminaires.

### Background of the Invention

More in particular, the mounting frame is suitable and extremely useful to be applied in a so called medical supply unit, usually provided above or near a hospital bed.

Such a medical supply unit, usually installed against the wall above or near the head side of the hospital bed, can be provided with several functions, from compressed air to data connections. Such medical supply units are for example known from and commercialized by Trilux.

The front side of such a medical supply unit usually consists of a single aluminum profile which for maintenance reasons is preferably flat at the side meant to be positioned at the outside of the medical supply unit, while at the opposite side, it is provided of elongate ribs which serve to fit the profile into the medical supply unit and for installing the mounting frames for the application modules, hereby avoiding the use of screws or any other irregularities at the front side.

Such a medical supply unit profile is further provided with openings allowing the application module to reach from the back side to the front side. The known mounting frames for such application modules are generally square shaped and flat and can be slit between two opposing L-shaped ribs provided on the back of the aluminum medical supply unit profile.

A disadvantage of such known mounting frames is that they require a lot of preparation and a final mounting plan of the complete medical supply unit. Indeed, sliding in the mounting frames requires a detailed vision on the end product and it is time consuming.

An alternative known mounting frame as described in EP0.837.535 is provided with resilient portions which allow to clips the mounting frames into the medical supply unit profile.

It is though known that resiliently applied mounting frames can not easily be displaced after their fixation and that they are generally expensive to produce and furthermore fragile. Moreover, such a mounting frame with resilient portions requires accurate mounting because in case of the opposite, the mounting frame may be pushed out of its weakly secured position. If this happens after the medical supply unit has been taken into use, consequences are worst as in that case the medical supply unit would require a complete disassembly.

The current invention aims to offer a solution for the above-mentioned and other disadvantages.

### Summary of the Invention

To this end the invention concerns a mounting frame for an application module having a generally rectangular shape and at least one rounded corner, wherein the at least one corner is rounded to such an extent that the distance between the at least one rounded corner and the diagonally opposing corner is of generally the same magnitude as the length of the generally rectangular frame, i.e. the largest distance between two opposing flanges of the frame.

Such a mounting frame allows to be inserted between the two L-shaped ribs provided on the back side of a medical supply unit profile, which form a T-profile-shaped longitudinal slot which is open towards the back side of the medical supply unit profile and serves for holding and for retaining mounting frames for the application modules. Indeed, the frame of which the width is smaller than the distance between the free extremities of the L-shaped ribs can, when suitably held, easily be inserted through the outer partial slot of relatively small dimensions into an inner partial slot of larger dimensions and can be rotated there from a first position into a second position, allowing fixation in its final position prior to the mounting of an application module.

It is clear that both the distance between ribs and the dimensions of the ribs, in other words the dimensions of the inner partial slot and the outer partial slot, determine the dimensions of the frame.

Generally spoken, the width of the frame should be smaller than the width of the outer slot, while the length of the frame should be smaller than the width of the inner slot.

Further, in order to enable the rotation from the first position in which the frame is inserted, into the second position, at least one corner should be rounded to such an extent that the distance between that rounded corner and the diagonally opposing corner is smaller than the width of the inner slot.

Therefore, the present invention is also related to an assembly of a medical supply unit profile and a mounting frame for an application module, where the medical supply unit profile is provided of a T-profile-shaped longitudinal slot, comprising an outer partial slot of smaller width Wo and an inner partial slot of larger width Wi, and where the mounting frame for an application module has a generally rectangular shape, having an overall width W and an overall length L, the frame of which the width W is smaller than the width Wo of the outer partial slot such that the mounting frame can be inserted into the T-profile-shaped slot, and the frame of which the length L is smaller than the width Wi of the inner partial slot, and the frame whereof at least one corner is rounded to such an extent that the distance A between the at least one rounded corner and the diagonally opposing corner is of generally the same magnitude as the length of the generally rectangular frame and smaller than the width Wi of the inner partial slot, such that the frame, once inserted through the outer slot, can be rotated there from a first position into a second position wherein the frame rests in the slot, allowing fixation of the mounting frame in its final position in the medical supply unit profile prior to the mounting of the application module.

After this easy application of the mounting frame, the application module can be provided through the central hole in the mounting frame and through the opening in the medical supply unit profile, which allows the application module to reach from the back side to the front side of the medical supply unit profile.

The application of the application module also fixes the mounting frame in its position, more in particular thanks to the corresponding shape and the cooperating edges of the protruding portion of the application module, on the one hand, and of the opening in the medical supply unit profile, on the other hand.

According to a special embodiment of the invention, the mounting frame is provided with resilient portions, which assure a secure fixing of the mounting frame once it is turned in its position in which the application module will be applied.

Such resilient portions prevent the sliding and/or the rotation of the mounting frame in the slot already prior to the application of the application module. Such resilient portions are in particular helpful where the assembly of the mounting frames and the application modules is performed in conditions where the medical supply unit profile is not always positioned horizontally.

According to a special embodiment of the mounting frame, more than one corner can be rounded. In case where two opposing corners are rounded, less rounding is required to enable the desired freedom to rotate.

### Brief Description of the Drawings

In order to better explain the characteristics of the present invention, the following preferred embodiment of a mounting frame according to the invention is described as an example without being limitative in any way, with reference to the accompanying figures, in which:
figure 1 is a perspective view of a mounting frame according to the invention;
figure 2 is a perspective view from the back side of a medical supply unit profile wherein the mounting frame of figure 1 is provided;
figures 3 and 4 represent the same medical supply unit profile with the same mounting frame in different positions;
figure 5 is a similar view of the same medical supply unit profile and mounting frame, wherein an electrical module is provided; and
figure 6 is a front view of the same medical supply unit profile and mounting frame, wherein an electrical module is provided.

### Detailed Description of Embodiment(s)

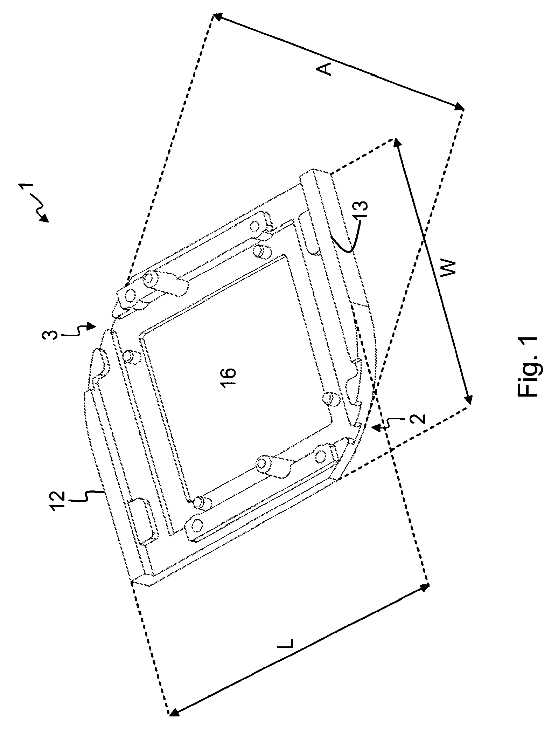

Figure 1 represents a preferred embodiment of a mounting frame 1 for application modules according to the invention, which has a generally rectangular shape with length L and width W.

In this embodiment, first corner 2 and diagonally opposed second corner 3 are rounded to such an extent that the distance A between these rounded corners is generally equal to the length L of the mounting frame 1.

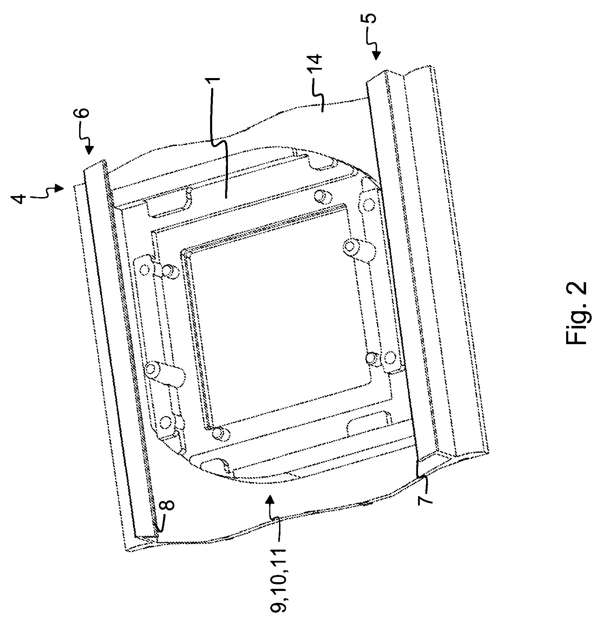

In figure 2, an assembly of a medical supply unit profile 4 and the mounting frame 1 of figure 1 is shown.

The medical supply unit profile 4 is provided on the back side with two L-shaped ribs 5 and 6 of which the respective free extremities 7 and 8 are oriented towards each other.

The two said ribs 5 and 6 form a T-profile-shaped longitudinal slot 9, comprising an outer partial slot 10 of smaller width Wo and an inner partial slot 11 of larger width Wi.

The width W of the mounting frame 1 is smaller than the width Wo of the outer partial slot 10 such that the mounting frame 1 can be inserted into the T-profile-shaped slot 9.

The length L of the mounting frame 1 is smaller than the width Wi of the inner partial slot 11.

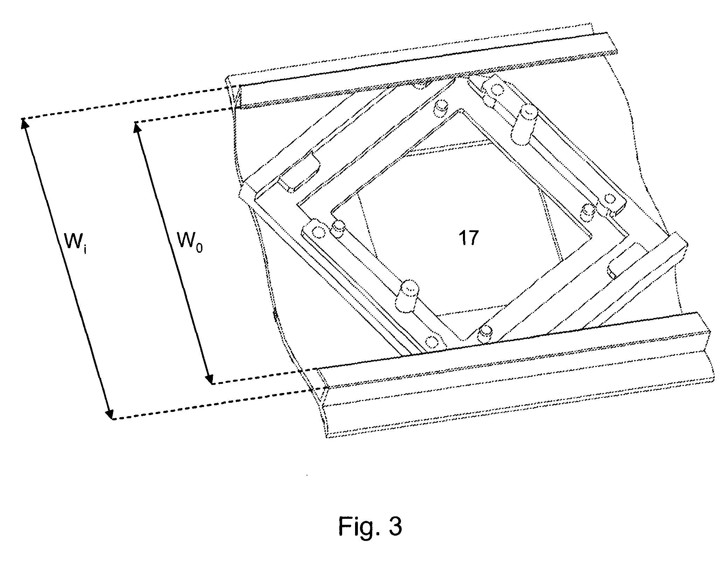

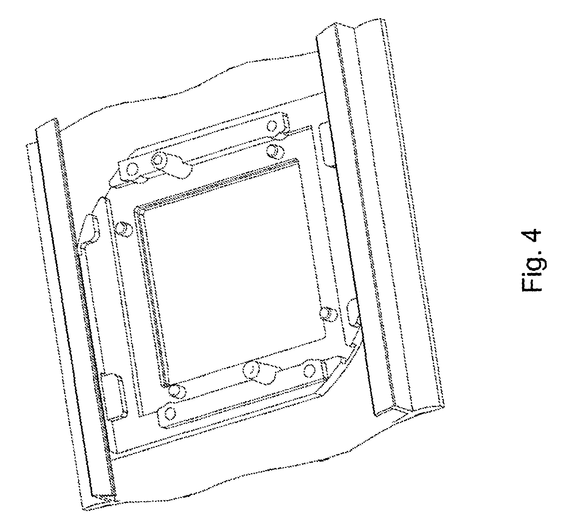

The distance A between the rounded corners 2 and 3 and the shape of these corners is such that the frame 1, once inserted through the outer slot 10, can be rotated there from a first position into a second position wherein the frame 1 rests in the slot 9, as shown in figures 3 and 4.

Thereto, the distance A between the two corners 2 and 3 according to all possible orientations is smaller than the width Wi of the inner partial slot 11.

In this embodiment, the thickness of the mounting frame 1 is greater along the shorter borderlines 12 and 13, more in particular a fraction less than the available height in the inner slot 11, i.e. between the free extremities 7 and 8 of the L-shaped ribs 5 and 6 on the one hand, and the base plate 14 of the medical supply unit profile 4 on the other hand.

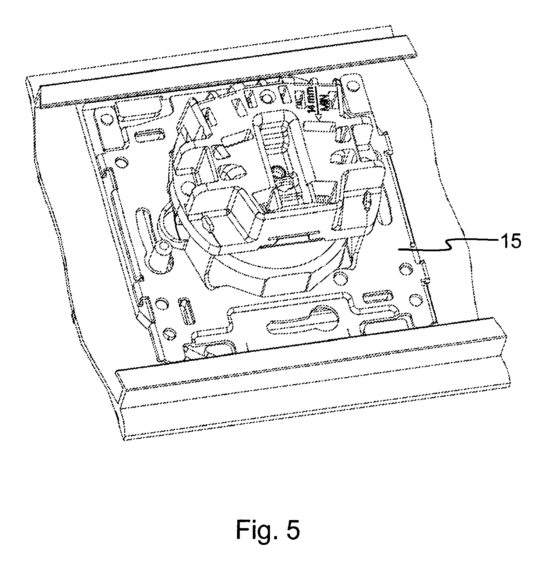

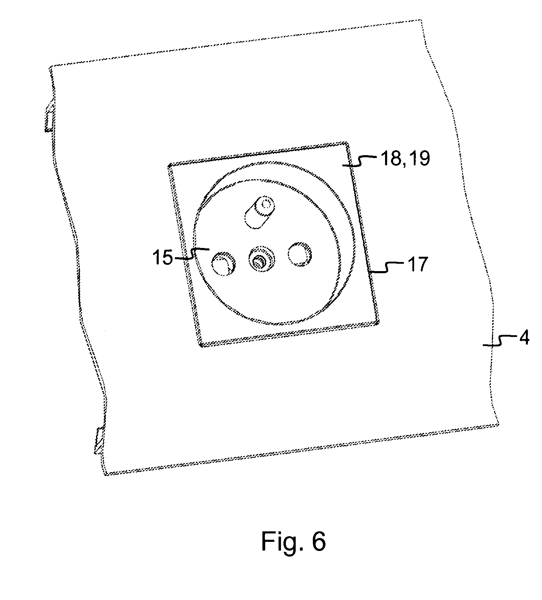

In figures 5 and 6 it is shown how, respectively from the back side and from the front side, an electric module 15 is applied.

The central portion of the mounting frame 1 is provided of a square opening 16, and also the base plate 14 of the medical supply unit profile 4 is provided of a series of corresponding square openings 17.

A square shaped protruding portion 18 of the electric module 15 is provided through the square opening 16 in the mounting frame 1 and also through the square opening 17 in the base plate 14 of the medical supply unit profile 4, which openings 16 and 17 ought to be situated in line of each other.

More in particular, the front side 19 of the square shaped protruding portion 18 of the electric module 15 is meant to be in line with the front side of the medical supply unit profile 4, which facilitates the cleaning and which avoids the accumulation of dirt.

For the same reasons, and also for accurately fixing the electric module 15 and the mounting frame 1 with respect to the medical supply unit profile 4, the shape and the measurements of the protruding portion 18 of the electric module 15 correspond, taking into account an appropriate tolerance, with the shape and the measurements of the openings 17 in the base plate 14 of the medical supply unit profile 4.

It is clear that the mounting frame 1 can optionally be provided with resilient portions, for example near one or both of the transitions of the rounded corners 2 and 3 and the flat shorter borderlines 12 and 13.

It is further noted that the protruding portion of the application module and the corresponding openings in the mounting frame and base plate of the profile generally can be of any shape, for instance rectangular, square, triangular, circular, oval, etc., depending on the application, design aspects, esthetical preferences, etc.

Such resilient portions, for example in the form of a stretched piece made of the same material of which the mounting frame 1 is made, or as a compact element made of a more elastic material, can be deformed if a certain force is performed in order to allow rotation of the mounting frame 1 in the desired position.

In the absence of similar forces in the opposite direction, the resilient portions would fix the mounting frame 1 in the position obtained as such.

Eventually, the resilient portions, apart from preventing undesired rotation, might be shaped such that they also prevent undesired sliding of the mounting frame 1, which further facilitates the mounting of the application modules.

It is clear that also only one corner can be rounded, or alternatively three or all four corners, which would allow rotation for bringing the frame 1 in the final position in both directions.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope of the claims. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. It will furthermore be understood by the reader of this patent application that the words "comprising" or "comprise" do not exclude other elements or steps, and that the words "a" or "an" do not exclude a plurality. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A mounting frame for an application module having a generally rectangular shape and at least one rounded corner (2,3), **characterized in that** the at least one corner (2,3) is rounded to such an extent that the distance (A) between the at least one rounded corner (2) and the diagonally opposing corner (3) is of generally the same magnitude as the length (L) of the generally rectangular frame (1).

2. Mounting frame according to claim 1, **characterized in that** it is provided of at least one resilient portion which allows fixation of the mounting frame (1) in its final position in a medical supply unit profile (4) prior to the mounting of an application device.

3. Assembly of a medical supply unit profile (4) and a mounting frame (1) for an application module, where the medical supply unit profile (4) is provided of a T-profile-shaped longitudinal slot (9), comprising an outer partial slot (10) of smaller width (Wo) and an inner partial slot (11) of larger width (Wi), **characterized in that** the mounting frame (1) for an application module has a generally rectangular shape, having an overall width (W) and an overall length (L), the mounting frame (1) of which the width (W) is smaller than the width (Wo) of the outer partial slot (10) such that the mounting frame (1) can be inserted into the T-profile-shaped slot (9), and the mounting frame (1) of which the length (L) is smaller than the width (Wi) of the inner partial slot (11), and the mounting frame (1) whereof at least one corner (2,3) is rounded to such an extent that the distance (A) between the at least one rounded corner (2) and the diagonally opposing corner (3) is of generally the same magnitude as the length (L) of the generally rectangular frame (1) and smaller than the width (Wi) of the inner partial slot (11), such that the mounting frame (1), once inserted through the outer slot (10), can be rotated there from a first position into a second position wherein the frame rests in the slot, allowing fixation of the mounting frame (1) in its final position in the medical supply unit profile (4) prior to the mounting of the application module.

## Patentansprüche

1. Befestigungsrahmen für ein Anwendungsmodul mit einer im Allgemeinen rechteckigen Form und mindestens einer abgerundeten Ecke (2,3), **dadurch gekennzeichnet, dass** die mindestens eine Ecke (2,3) so abgerundet ist, dass der Abstand (A) zwischen der mindestens einen abgerundeten Ecke (2) und der diagonal gegenüberliegenden Ecke (3) im Allgemeinen die gleiche Größenordnung hat wie die Länge des im Allgemeinen rechteckigen Rahmens (1).

2. Befestigungsrahmen entsprechend Anspruch 1, **dadurch gekennzeichnet, dass** er mit mindestens einem elastischen Teil versehen ist, der die Anbringung des Befestigungsrahmens (1) in seiner endgültigen Position in einem Profil für medizinische Versorgungseinheiten (4) vor der Montage eines Anwendungsgeräts ermöglicht.

3. Baugruppe aus einem Profil für medizinische Versorgungseinheiten (4) und einem Befestigungsrahmen (1) für ein Anwendungsmodul, wobei das Profil für medizinische Versorgungseinheiten (4) mit einem länglichen Schlitz (9) in T-Profilform versehen ist, der aus einem äußeren partiellen Schlitz (10) mit geringerer Breite (Wo) und einem inneren partiellen Schlitz (11) mit größerer Breite (Wi) besteht, **dadurch gekennzeichnet, dass** der Befestigungsrahmen (1) für ein Anwendungsmodul eine im Allgemeinen rechteckige Form mit einer Gesamtbreite (W) und einer Gesamtlänge (L) hat. Der Befestigungsrahmen (1) hat einen äußeren partiellen Schlitz (10), dessen Breite (W) geringer ist als die Breite (Wo) ist, sodass der Befestigungsrahmen (1) in den Schlitz (9) in der T-Profilform eingeführt werden kann. Länge (L) des Befestigungsrahmens (1) ist geringer als die Breite (Wi) des inneren partiellen Schlitzes (11). Mindestens eine Ecke (2,3) des Befestigungsrahmens (1) ist so abgerundet, dass der Abstand (A) zwischen der mindestens einen abgerundeten Ecke (2) und der diagonal gegenüberliegenden Ecke (3) im Allgemeinen die gleiche Größenordnung hat wie die Länge des im Allgemeinen rechteckigen Rahmens (1) und kleiner als die Breite (Wi) des inneren partiellen Schlitzes (11), sodass der Befestigungsrahmen (1), sobald er durch den äußeren Schlitz (10) eingeführt wird, dort von einer ersten Position in eine zweite Position gedreht werden kann, in der der Rahmen im Schlitz ruht, was die Anbringung des Befestigungsrahmens (1) in seiner endgültigen Position im Profil für medizinische Versorgungseinheiten (4) vor der Montage eines Anwendungsgeräts ermöglicht.

## Revendications

1. Support de montage pour un module d'application ayant une forme généralement rectangulaire et comportant au moins un angle arrondi (2, 3), **caractérisé en ce que** le au moins un angle (2,3) est arrondi à un tel point que la distance (A) entre le au moins un angle arrondi (2) et l'angle diagonalement opposé (3) est sensiblement de la même grandeur que la longueur (L) du support sensiblement rectangulaire (1).

2. Support de montage selon la revendication 1, **caractérisé en ce qu'**il est pourvu d'au moins une partie résiliente qui permet la fixation du support de montage (1) dans sa position finale dans un profil pour bloc d'alimentation médical (4) avant le montage d'un dispositif d'application.

3. Assemblage d'un profil pour bloc d'alimentation médical (4) et d'un support de montage (1) pour un module d'application, dans lequel le profil pour bloc d'alimentation médical (4) est muni d'une rainure longitudinale en forme de T (9), comprenant une rainure partielle extérieure (10) de petite largeur (Wo) et une rainure partielle intérieure (11) de largeur plus grande (Wi), **caractérisé en ce que** le support de montage (1) pour un module d'application a une forme sensiblement rectangulaire, ayant une largeur hors tout (W) et une longueur hors tout (L), la largeur (W) du support de montage (1) est inférieure à la largeur (Wo) de la rainure partielle extérieure (10) de telle façon que le support de montage (1) peut être inséré dans la rainure en forme de T (9), la longueur (L) du support de montage (1) est inférieure à la largeur (Wi) de la rainure partielle intérieure (11) et au moins un angle (2,3) du support de montage (1) est arrondi à un tel point que la distance (A) entre le au moins un angle arrondi (2) et l'angle diagonalement opposé (3) est sensiblement de la même grandeur que la longueur (L) du support sensiblement rectangulaire (1) et plus petite que la largeur (Wi) de la rainure partielle intérieure (11), de telle manière que le support de montage (1), une fois inséré dans la rainure extérieure (10), peut y être tourné à partir d'une première position dans une seconde position dans laquelle le support demeure dans la rainure, permettant la fixation du support de montage (1) dans sa position finale dans le profil pour bloc d'alimentation médical (4) avant le montage du module d'application.
